# FASCICULE DE BREVET EUROPEEN

(11) **EP 1 925 868 B1**
(45) Date de publication et mention de la délivrance du brevet: **25.09.2013**
(21) Numéro de dépôt: 07291375.9
(22) Date de dépôt: 16.11.2007
(51) Int. Cl.: F16L 19/00, F16L 27/00

(54) **Dispositif de jonction étanche**
Wasserdichte Verbindungseinrichtung
Watertight joint device

(30) Priorité: 21.11.2006 FR 0610171
(43) Date de publication de la demande: 28.05.2008
(73) Titulaire: DAHER AEROSPACE, 41400 Saint-Julien-de-Chedon (FR)
(72) Inventeur: Filippi, Georges, 33700 Merignac (FR); Bailly, Dominique, 37530 Saint Regle (FR)
(74) Mandataire: Hamann, Jean-Christophe

(56) Documents cités:
- EP-A1- 0 161 165
- EP-A1- 1 357 323
- DE-C1- 4 326 304
- FR-A1- 2 307 211
- FR-A1- 2 849 151
- FR-A1- 2 854 675
- GB-A- 1 591 530
- US-A- 2 913 553
- US-A- 3 223 438
- US-A- 5 131 689
- US-A1- 2004 051 310

## Description

La présente invention appartient aux domaines des tuyauteries de conditionnement d'air et plus particulièrement aux dispositifs de jonction étanche de tuyaux ou manchons.

Les tuyaux doivent résister aux différences de pression, vibrations ou différences thermiques et posséder des dispositifs de jonction étanche ayant certaines caractéristiques physiques leur permettant d'obtenir une ligne de tuyauteries ajustable tout en lui assurant une certaine rigidité de structure.

En effet, ces dispositifs de jonction doivent résister à l'assemblage de tuyauteries, à leur mise en fonction, aux manutentions lors de leur transport, ainsi qu'aux multiples verrouillages/déverrouillages lors de la maintenance. De plus, lors de la fabrication de tels dispositifs, on tient compte des normes relatives à leur tenue mécanique quant à leur résistance aux vibrations, à la température, l'humidité, poussière, champignons... et aux environnements spécifiés par l'utilisateur final.

Un premier système de jonction connu, permettant de relier deux tuyaux entre eux, est constitué d'un manchon souple et de colliers annulaires métalliques à disposer en recouvrement desdits deux tuyaux. Ce système permet un assemblage sans trop de jeu et donne un certain degré de liberté axial lors du montage des tuyauteries. Ce système présente néanmoins certains inconvénients, tels que la gestion de pièces supplémentaires à celles des tuyauteries et de posséder en temps voulu la bonne quantité ainsi que la bonne dimension correspondant au diamètre tuyaux souhaités. De plus, ce système augmente le temps d'installation d'une tuyauterie étant donné qu'il est nécessaire de réaliser un réglage complexe des colliers et nécessite des outillages spécifiques.

Ensuite, une étape de vérification de leur positionnement sur les zones de recouvrement des manchons par rapport aux tuyauteries doit être effectuée et prolonge une nouvelle fois le temps d'installation. En outre, ce système ne permet pas une étanchéité parfaite étant donné qu'il est fonction de l'état de surface des tuyauteries.

Un deuxième principe de jonction connu, selon la demande de brevet français n°0305517 et le brevet français n°2857079, les tuyauteries peuvent être assemblées par l'intermédiaire de brides à fermeture rapide comprenant deux colliers annulaires fixes sur chaque extrémité de manchon ou tuyau caractérisé en ce qu'il comporte au moins une bride tournante annulaire mobile avec des tenons en forme de crochets régulièrement espacés sur au moins un desdits manchons et apte à relier ensembles lesdits colliers annulaires. Ce dispositif apte à relier de manière étanche deux manchons possède comme avantage d'engendrer une rigidité de la tuyauterie permettant ainsi de supprimer des supports supplémentaires initialement prévus. Cet avantage se révèle être également un inconvénient étant donné qu'il est nécessaire de réaliser de nombreux ajustements lors de l'assemblage et des réajustements de défaut lors de son fonctionnement. En effet, ce type de dispositif ne permet aucun degré de liberté.

US 2004/005 1 310, FR 284 915 1, FR 2 307 211, US 3 223 438, US 5 131 689 et US 2 913 553 décrivent des dispositifs de jonction autorisant au moins un degré de liberté.

On connaît par ailleurs de EP 1 357 323, un dispositif pour former un raccordement flexible entre des tuyaux. Ce raccordement se présente sous forme d'un soufflet tubulaire flexible qui est associé par chacune de ses extrémités libres à des cadres de maintien rigides, les cadres rigides étant destinés à venir s'appuyer contre le bord des tuyaux.

DE 43 26 304 divulgue des moyens de connexion de deux tuyaux formés également par un manchon flexible, ce manchon étant fixé directement sur la surface extérieure des extrémités des tuyaux par deux bandes annulaires thermosensibles.

La présente invention remédie aux inconvénients de l'art antérieur en proposant un ensemble de tuyauteries selon la revendication 1 comprenant en outre un dispositif de jonction ou de fermeture alliant solidité et degré de liberté permettant de réaliser en une seule opération un assemblage de tuyauteries de manière étanche et ajustable.

Avantageusement, ce dispositif crée un gain de temps considérable du fait de l'absence de manipulation d'outillages spécifiques supplémentaires et de gestion du stock des anciens multiples dispositifs de serrage et outillages spécifiques.

Ce dispositif permet de procurer des degrés de liberté supplémentaires en reliant de manière étanche deux tuyauteries avec une souplesse radiale et/ou axiale et/ou angulaire lors de l'installation ou l'assemblage d'un ensemble de tuyauteries et lors de leur mise en fonction.

La présente invention permet de disposer un seul et même dispositif contenant le manchon, le système de fermeture étanche et ajustable.

A cette fin, le dispositif apte à relier de manière étanche deux manchons par au moins une de leurs extrémités respectives pourvues chacune d'un moyen de fixation apte à coopérer avec des moyens de liaison autorisant au moins un degré de liberté d'un manchon par rapport à l'autre en position reliée et comportant un élément d'ajustement, est caractérisé en ce que lesdits moyens de liaison sont formés d'un ou de plusieurs éléments d'ajustement et d'au moins un élément de connexion mobile, ledit au moins élément d'ajustement et /ou ledit au moins élément de connexion mobile étant aptes à coopérer avec les moyens de fixation rapportés sur les extrémités des manchons.

Lesdits moyens de fixation sont au moins un collier annulaire fixé sur au moins une extrémité d'un manchon et ledit au moins un élément de connexion mobile une bride tournante.

Avantageusement, ledit au moins un élément d'ajustement est au moins un moyen d'ajustement radial et/ou axial et/ou angulaire.

Ledit au moins un élément d'ajustement peut être un au moins un élément souple, tel qu'un soufflet de tuyauterie ou flexible ou élément thermoformé ondulé et peut comporter, en outre, un élément de rigidité extérieur sur son contour.

Alternativement, ledit au moins un élément d'ajustement est formé d'au moins une pièce de fixation comprenant un double excentrique ou d'au moins un élément chacun étant formé d'une partie en forme de L inversé possédant une butée en son extrémité, et d'une bague.

De manière alternative, ledit au moins un élément d'ajustement est constitué d'au moins deux demi-rotules ou d'au moins une portée sphérique formée aux interfaces du collier annulaire.

Selon un autre arrangement, ledit au moins un élément d'ajustement est au moins un élément déformable.

L'invention sera bien comprise à la lumière de la description qui suit, se rapportant à des exemples illustratifs, et en aucun cas exhaustifs, de la présente invention, en référence aux dessins, ci-joints, dans lesquels :
- la figure 1 représente en perspective l'extrémité d'un manchon avec un système de fermeture annulaire selon l'art antérieur ;
- la figure 2 est une vue schématique en coupe de deux manchons reliés par une bride tournante et deux colliers annulaires fixes selon la figure 1 ;
- la figure 3 est un schéma en coupe illustrant deux tuyaux reliés par une première alternative du dispositif selon l'invention permettant de pallier au problème d'ajustement radial ;
- les figures 4 à 6 sont des schémas en coupe illustrant deux tuyaux reliés par trois autres alternatives du dispositif permettant de pallier au problème d'ajustement angulaire, les dispositifs des figures 4 et 5 ne faisant pas partie de l'invention telle que revendiquée;
- la figure 7 est un schéma en coupe illustrant deux tuyaux reliés par une cinquième alternative du dispositif ne faisant pas partie de l'invention telle que revendiquée permettant de pallier au problème d'ajustement axial ;
- les figures 8 et 9 sont des schémas en coupe illustrant deux tuyaux reliés par une autre alternative du dispositif permettant de conférer aux tuyaux n'importe quel degré de liberté, le dispositif de la figure 8 ne faisant pas partie de l'invention telle que revendiquée.

Un dispositif de jonction permet de relier de manière étanche deux manchons ou un ensemble de tuyauteries de même diamètre, ou de diamètre sensiblement équivalent.

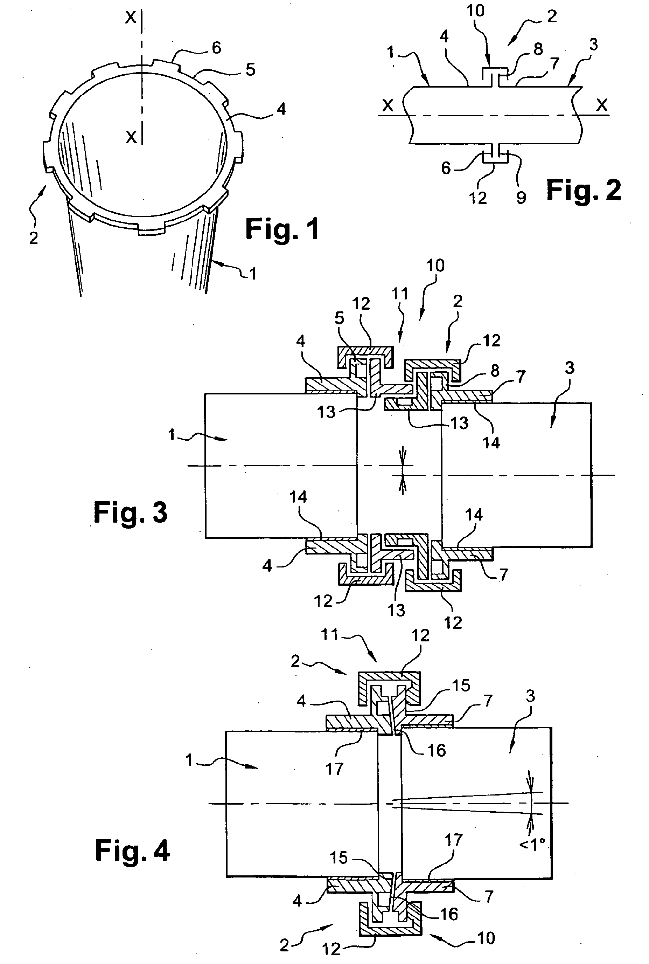

La figure 1 représente un manchon 1 de forme générale cylindrique et d'axe longitudinal X-X selon l'art antérieur.

Un système de blocage 2 assurant la fermeture mécanique (selon la demande de brevet français n°0305517 ou le brevet français n°2857079), est disposé aux extrémités d'un premier manchon 1 aptes à être reliées à un autre manchon 3.

Les manchons 1 et 3 se présentent selon toute forme appropriée cylindrique en au moins une de leurs extrémités, c'est-à-dire qu'ils peuvent être, par exemple, coudés, repliés sur eux-mêmes ou en forme de U.

Le manchon 1 souple présente au moins sur une de ses extrémités au moins un moyen de fixation ou collier annulaire fixe 4 comportant un rebord 5 avec des éléments en saillie 6.

Selon la représentation de l'art antérieur de la figure 2, l'extrémité d'un premier manchon 1 avec un premier collier annulaire fixe 4 est reliée à l'extrémité d'un second manchon 3 avec au moins un second moyen de fixation ou collier annulaire 7.

Le second collier annulaire fixe 7 comporte un rebord 8 avec des éléments en saillie 9.

Les premier 1 et second 3 manchons présentent, lorsqu'ils sont assemblés, sensiblement un même axe longitudinal X-X et un même diamètre.

Les premier 4 et second 7 colliers annulaires peuvent être sensiblement identiques, c'est-à-dire qu'ils présentent les mêmes éléments en saillie 6 et 9, le même rebord 5 et 8.

Les premier 4 et second 7 colliers annulaires fixes sont reliés et maintenus accolés par des moyens de liaison 10.

Dans la présente invention, les moyens de liaison 10 sont constitués et/ou comprennent en outre, au moins un moyen d'ajustement 11 (non représenté sur les figures 1 et 2) et au moins un élément de connexion mobile 12.

La connexion mobile peut se conformer à une bride tournante 12 permettant d'assurer que l'axe longitudinal du premier manchon 1 soit coaxial avec l'axe longitudinal du second manchon 3.

La bride tournante 12 est insérée dans le second manchon 3 et coulisse librement sur ce manchon 3.

Toutefois, il est aussi envisageable de faire coulisser la bride tournante 12 sur le premier manchon 1.

La présente invention concerne un dispositif de jonction alliant solidité et degré de liberté permettant de réaliser en une seule opération un assemblage de la tuyauterie de manière étanche et ajustable.

On entend par « degré de liberté », les mouvements indépendants qui restent possibles d'un manchon lié mécaniquement à un autre manchon.

Le dispositif selon l'invention permet de résoudre le problème de l'association de matériaux différents du système de blocage rigide précédemment décrit à au moins un moyen ou élément intermédiaire d'ajustement, tous deux intégrés à un manchon ou tuyau.

La figure 3 est un schéma en coupe illustrant deux tuyaux reliés par une première alternative du dispositif selon l'invention permettant de pallier au problème d'ajustement radial.

Plus précisément sur la figure 3, deux tuyaux ou manchons 1, 3 sont reliés par au moins un système de blocage 2 tel que décrit aux figures 1 et 2, associé à au moins un élément intermédiaire d'ajustement 11 permettant de conférer une certaine souplesse ou degré de liberté à la tuyauterie ainsi assemblée.

Selon cet arrangement, l'élément d'ajustement 11 est intégré aux dispositifs de blocage 2 des manchons. Ce dernier peut se représenter sous la forme d'une pièce de fixation 13 possédant un double excentrique permettant de transformer un mouvement circulaire en un mouvement rectiligne.

Plus précisément, cet élément de fixation 13 fonctionne avec le système de blocage 2 comme deux pièces articulées glissant de manière non coaxiale l'une sur l'autre permettant ainsi, grâce à l'association de joints 14, de maintenir une liaison souple et étanche.

De manière alternative, un élément souple, de type gel (non représenté mais de type connu en soi), peut être intercalé entre ledit au moins un élément de connexion mobile 12 et ledit au moins un élément d'ajustement 11.

Cette pièce de fixation intermédiaire 13 permet une liaison ajustable de manière coaxiale d'au moins deux manchons 1 et 3. Cette première alternative selon l'invention permet de mieux appréhender le désalignement de deux ensembles de tuyauteries dont les axes doivent rester dans le même axe.

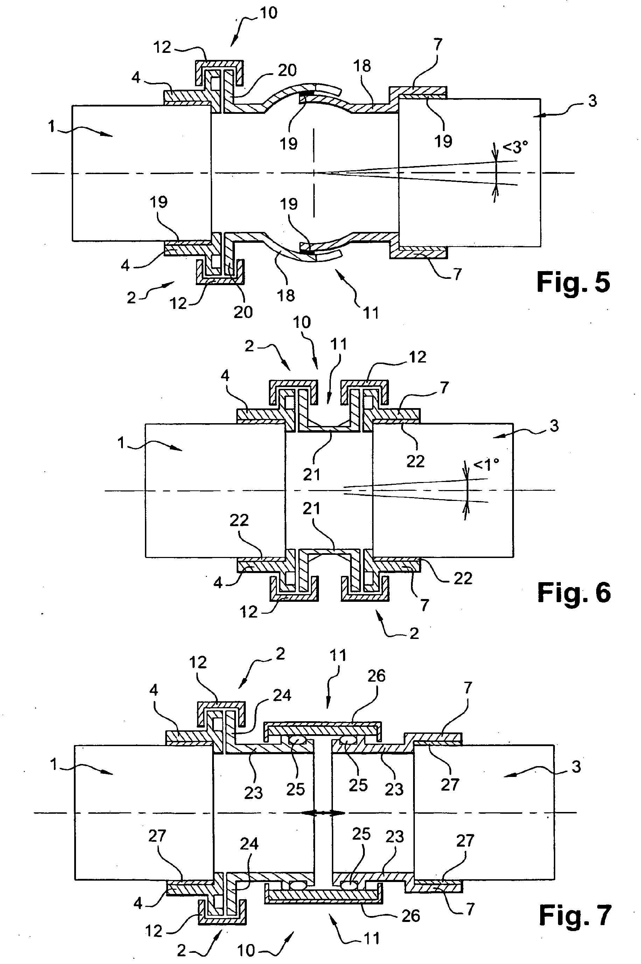

Les figures 4 à 6 sont des schémas en coupe illustrant deux tuyaux reliés par trois autres alternatives du dispositif permettant de pallier au problème d'ajustement angulaire, les dispositifs des figures 4 et 5 ne faisant pas partie de l'invention telle que revendiquée.

Dans ces cas, les deux tuyaux ou manchons 1 et 3 sont reliés par au moins un système de blocage 2, tel que décrit aux figures 1 et 2, associé à au moins un élément d'ajustement 11 permettant de conférer un degré de liberté angulaire à la tuyauterie.

Ces alternatives permettent d'obtenir un rotulage, c'est-à-dire une rotation de quelques degrés par rapport à l'axe horizontal, par exemple, afin de résoudre les problèmes de perpendicularité lors de l'ajustement de deux manchons.

La figure 4 illustre un dispositif intégrant un dispositif de blocage 2 comme décrit précédemment comportant à son interface 15 au moins une portée sphérique 16, permettant une rotation angulaire des deux manchons ainsi reliés.

Alternativement, le dispositif de blocage peut comporter à son interface 15 des moyens proéminents (non représentés) sous forme de micro variations locales du relief, telles que des bosses et/ou des cavités, permettant une translation verticale, par exemple, en escalier des interfaces 15.

Le ou les collier(s) annulaire(s) fixe(s) 4 ou 7, peut comporter des moyens de d'adhérence 17.

Selon une autre alternative, comme illustrée à la figure 5, les deux tuyaux 1 et 3 peuvent être reliés par l'intermédiaire d'au moins deux éléments en arc de cercle ou demi-rotules 18 complémentaires associées au dispositif de blocage 2 décrit précédemment.

Dans cet arrangement, deux demi-rotules 18 sont nécessaires et sont en contact par l'intermédiaire de joints 19 ou tout autre système permettant l'étanchéité de type connu en soi.

Alternativement, la demi-rotule 18 peut être intégrée directement au collier annulaire fixe 4 ou 7.

De manière préférentielle, une première demi-rotule 18 d'un premier manchon 3 est intégrée au collier annulaire fixe 7 et une seconde demi-rotule 18 est associée au dispositif de blocage 2, par l'intermédiaire d'une partie en forme de L inversé 20 en son extrémité.

La figure 6 illustre une autre alternative permettant de pallier au problème d'ajustement angulaire de deux manchons reliés entre eux.

Dans cette configuration, les deux tuyaux ou manchons 1 et 3 sont reliés par au moins un système de blocage 2 tel que décrit aux figures 1 et 2, associé à au moins un élément d'ajustement déformable 21 permettant de leur conférer un degré de liberté.

De préférence, cet élément déformable 21 possède une forme générale de U et permet de joindre au moins deux dispositifs de blocage 2.

Cet élément déformable 21 est constitué d'un matériau déformable permettant d'assurer la rigidité de la jonction tout en ayant une certaine souplesse angulaire.

De préférence, à l'interface de l'élément déformable 21 et du système de blocage 2, des joints ou moyens d'adhérence 22 sont prévus.

La figure 7 est un schéma en coupe illustrant deux tuyaux reliés par une cinquième alternative du dispositif figures 4 et 5 ne faisant pas partie de l'invention telle que revendiquée permettant de pallier au problème d'ajustement axial

Au moins deux manchons 1 et 3 sont reliés par au moins un système de blocage 2, associé à au moins un moyen d'ajustement 11 permettant de leur conférer un degré de liberté suivant l'axe X-X.

Dans cette configuration, l'élément d'ajustement 11 est assimilé à au moins un élément 23, chacun étant constitué :
- d'une partie 24 en forme de L inversé possédant une butée 25 en leur extrémité (en contact du collier annulaire 4 ou 7 et de manière alternative intégrée à celui-ci),
- d'un élément de contact ou bague 26 permettant de posséder un jeu relatif aux tolérances de longueur de la tuyauterie.

La bague 26 emprisonne les deux butées 25 de chaque manchon en leur extrémité et sur une certaine longueur, permettant un mouvement télescopique axial.

De manière alternative, les colliers annulaires peuvent posséder des joints ou des moyens d'adhérence 27.

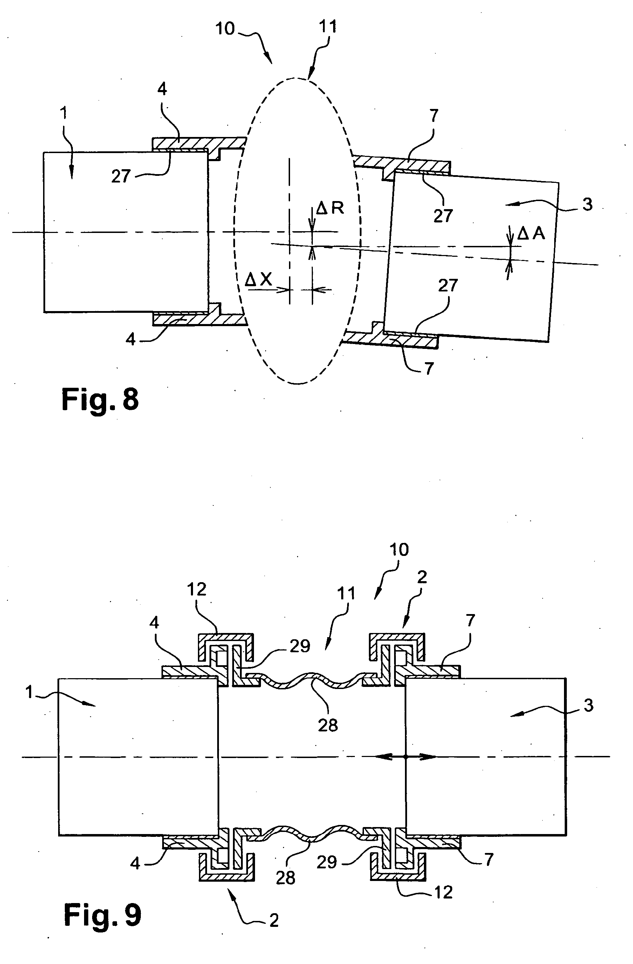

Les figures 8 et 9 sont des schémas en coupe illustrant deux tuyaux reliés par une autre alternative du dispositif permettant de conférer aux tuyaux n'importe quel degré de liberté, le dispositif de la figure 8 ne faisant pas partie de l'invention telle que revendiquée.

Au moins deux manchons 1 et 3 sont reliés par au moins un système de blocage 2 tel que décrit aux figures 1 et 2, associé à au moins un élément souple 28 permettant de leur conférer plusieurs degrés de liberté.

Ledit au moins un élément souple 28 associé à au moins un système de blocage 2 intégré au manchon 1 ou 3 forment le un dispositif permettant d'effectuer :
- un ajustement axial afin de faire disparaître, lors de l'assemblage de plusieurs manchons, un écart par exemple de ΔX ± 5.0 mm, entre deux extrémités de manchons ;
- un ajustement radial afin d'aligner de manière co-axiale deux ensembles de tuyauteries, par exemple de ΔR ± 4.0 mm (selon n'importe quelle direction) ;
- un ajustement angulaire permettant de pallier au problème d'ajustement angulaire, par exemple de ΔA ± 5° (selon n'importe quelle direction) entre les axes des deux tuyaux.

L'élément souple 28 est associé au système de blocage 2 par l'intermédiaire d'une pièce intermédiaire 29 en forme de L.

Dans cet exemple, le dispositif de jonction permet de posséder une souplesse radiale et/ou axiale et/ou angulaire.

L'élément souple 28 peut être constitué par exemple, d'un soufflet de tuyauterie souple.

Il peut être constitué de silicone, élastomère, ou une autre matière plastique ou toute autre matière ou tissu souple de type connu en soi.

Alternativement, cet élément souple 28 peut être rigidifié par l'intermédiaire d'un élément de rigidité extérieur, tel que par exemple une spirale en plastique ou en métal sur son contour.

Selon d'autres exemples, l'élément souple 28 peut être thermoformé d'ondulations ou être un flexible.

De manière alternative, le dispositif de jonction comporte une butée ou un bourrelet ou un soufflet sur les manchons comme élément d'ajustement supplémentaire.

Lorsque le dispositif de jonction est rapporté aux colliers annulaires, il est joint mécaniquement, tel que par exemple par pinçage, serrage, vissage, sertissage, clipsage, collage ou par l'intermédiaire de butée axiale supplémentaire etc.

La présente invention concerne donc un ensemble de tuyauteries comprenant au moins deux manchons 1, 3 comportant au moins un dispositif tel que décrit ci-dessus, c'est-à-dire, au moins un système de blocage 2 tel que décrit aux figures 1 et 2, associé à au moins un élément d'ajustement 11 permettant de leur conférer au moins un degré de liberté.

Ainsi, la présente invention concerne un ensemble de tuyauteries comprenant :
- au moins deux manchons 1, 3 comportant au moins un dispositif tel que décrit ci-dessus, c'est-à-dire, au moins un système de blocage 2 tel que décrit aux figures 1 et 2, associé à au moins un élément d'ajustement 11 permettant de leur conférer au moins un degré de liberté, et
- au moins un dispositif de blocage 2 tel que décrit selon la demande de brevet français n°0305517 ou le brevet français n°2857079.

Le dispositif selon l'invention satisfait à certaines contraintes mécaniques requises telles que la pression, la manutention lors des verrouillages ou déverrouillages des ensembles de tuyauteries, aux accélérations dues lors de la mise en fonction de la tuyauterie, aux chocs et aux vibrations, ainsi qu'aux contraintes relatives aux normes telles que : feu, fumée, humidité, champignons et pollutions selon l'environnement dans lequel il est utilisé, tel que par exemple du sable, sel, poussière...

## Revendications

1. Ensemble de tuyauteries de conditionnement d'air, constitué de deux manchons reliés de manière étanche par leurs extrémités,
a. chaque manchon (1, 3) comprenant à son extrémité apte à être reliées un collier (4, 7) annulaire fixe identique comportant des éléments en saillie (6, 9) et un rebord (5, 8),
b. ledit ensemble de tuyauterie comportant une première bride tournante (12) apte à relier coaxialement et à bloquer les deux manchons en coopérant avec leurs colliers annulaires fixes;
c. **caractérisé en ce que** ledit ensemble de tuyauteries comporte un moyen d'ajustement (11) connecté à une de ses extrémités par la première bride tournante (12) au collier (4, 7) annulaire fixe d'un des manchons (1, 3) et connecté à l'autre extrémités par une seconde bride tournante (12) au collier (4, 7) annulaire fixe de l'autre des manchons (1, 3);
d. et que le moyen d'ajustement (11) est apte à conférer un degré de liberté entre les manchons liés mécaniquement par ledit moyen d'ajustement (11).

2. Ensemble de tuyauterie selon la revendication 1, **caractérisé en ce qu'**il comprend un moyen d'ajustement (11) sous la forme d'un élément souple (28) ou déformable (21).

3. Ensemble de tuyauteries selon la revendication 2, **caractérisé en ce que** ledit élément souple (28) est un soufflet de tuyauterie, un flexible ou un élément thermoformé ondulé.

4. Ensemble de tuyauteries selon la revendication 2, **caractérisé en ce que** ledit élément souple (28) possède un élément de rigidité extérieur sur son contour.

5. Ensemble de tuyauteries selon la revendication 1, caractérisé en qu'il comprend un moyen d'ajustement (11) formé d'au moins une pièce de fixation (13) comprenant un double excentrique.

6. Ensemble de tuyauteries selon la revendication 1, **caractérisé en ce qu'**il comprend un moyen d'ajustement (11) constitué de 2 éléments (23) formés chacun d'une partie (24) en forme de L inversé possédant une butée (25) en son extrémité, et d'une bague (26).

7. Ensemble de tuyauteries selon la revendication 1, **caractérisé en ce qu'**il comprend un moyen d'ajustement (11) constitué de deux demi-rotules (18, 19).

## Patentansprüche

1. Leitungseinheit für Klimaanlagen, bestehend aus zwei, über ihre Enden abdichtend verbundenen Leitungsstutzen, wobei
a. jeder Leitungsstutzen (1,3) an seinem verbindungsfähigen Ende die gleiche feste Ringschelle (4,7) mit hervorstehenden Elementen (6,9) und einem Rand (5,8) umfasst,
b. die Leitungseinheit einen ersten Drehflansch (12) umfasst, mit dem die beiden Leitungsstutzen durch ein Zusammenwirken mit ihren festen Ringschellen koaxial verbunden und blockiert werden können;
c. **dadurch gekennzeichnet, dass** die Leitungseinheit ein Justierungsmittel (11) umfasst, das durch den ersten Drehflansch (12) an einem seiner Enden mit der festen Ringschelle (4,7) eines der Stutzen (1,3) verbunden ist und am anderen Ende durch einen zweiten Drehflansch (12) mit der festen Ringschelle (4,7) des anderen der Stutzen (1,3) verbunden ist;
d. und dadurch, dass das Justierungsmittel (11) zwischen den mechanisch durch das Justierungsmittel (11) verbundenen Stutzen einen Freiheitsgrad verleihen kann.

2. Leitungseinheit nach Anspruch 1, **dadurch gekennzeichnet, dass** sie ein Justierungsmittel (11) in Form eines elastischen (28) oder verformbaren (21) Elements umfasst.

3. Leitungseinheit nach Anspruch 2, **dadurch gekennzeichnet, dass** das elastische Element (28) ein Rohrbalg, ein Schlauch oder ein gewelltes, thermogeformtes Element ist.

4. Leitungseinheit nach Anspruch 2, **dadurch gekennzeichnet, dass** das elastische Element (28) an seiner Kontur ein äußeres Festigkeitselement aufweist.

5. Leitungseinheit nach Anspruch 1, **dadurch gekennzeichnet, dass** sie ein Justierungsmittel (11) umfasst, das mindestens aus einem Befestigungselement (13) mit einem Doppelexzenter besteht.

6. Leitungseinheit nach Anspruch 1, **dadurch gekennzeichnet, dass** sie ein aus zwei Elementen (23) bestehendes Justierungsmittel (11) umfasst, die jeweils aus einem Bereich (24) in Form eines umgekehrten L mit einem Anschlag (25) an dessen Ende und einem Ring (26) bestehen.

7. Leitungseinheit nach Anspruch 1, **dadurch gekennzeichnet, dass** sie ein aus zwei Halbgelenken (18,19) bestehendes Justierungsmittel (11) umfasst.

## Claims

1. A set of air-conditioning pipes made up of two sleeves connected by their ends in a sealed manner,
a. each sleeve (1, 3) comprising at its end adapted to be connected an identical fixed annular collar (4, 7) comprising protruding elements (6, 9) and an edge (5, 8),
b. said set of pipes comprising a first loose flange (12) adapted for coaxially connecting and to blocking the two sleeves by cooperating with their fixed annular collars;
c. **characterised in that** said set of pipes comprises a fitting means (11) connected at one of its ends by the first loose flange (12) to the fixed annular collar (4, 7) of one of the sleeves (1, 3) and connected at the other end by a second loose flange (12) to the fixed annular collar (4, 7) of the other sleeve (1, 3);
d. and **in that** the fitting means (11) is adapted to allow a degree of freedom between the sleeves connected mechanically by the said fitting means (11).

2. A set of pipes according to claim 1, **characterised in that** it comprises a fitting means (11) in the form of a flexible (28) or deformable (21) element.

3. A set of pipes according to claim 2, **characterised in that** the said flexible element (28) is a pipe bellows, a hose or a corrugated thermoformed element.

4. A set of pipes according to claim 2, **characterised in that** the said flexible element (28) has an exterior stiffening element on its perimeter.

5. A set of pipes according to claim 1, **characterised in that** it comprises a fitting means (11) in the form of at least one fastener (13) comprising a double eccentric.

6. A set of pipes according to claim 1, **characterised in that** it comprises a fitting means (11) made up of two elements (23) each formed by a part (24) with a reversed L shape and comprising a stopper (25) at its end, and a ring (26).

7. A set of pipes according to claim 1, **characterised in that** it comprises a fitting means (11) made up of two half balls (18, 19).
